(19) Europäisches Patentamt
European Patent Office
Office européen des brevets

(11) EP 0 605 217 B1

(12) **EUROPEAN PATENT SPECIFICATION**

(45) Date of publication and mention
of the grant of the patent:
**17.11.1999 Bulletin 1999/46**

(51) Int. Cl.⁶: **A23D 7/00**, A23L 1/05,
A23L 1/308

(21) Application number: **93310499.4**

(22) Date of filing: **23.12.1993**

(54) **Non-Fat or low-fat spread**

Fettfreier oder fettarmer Brotaufstrich

Pâte à tartiner sans graisse ou a faible teneur en graisse

(84) Designated Contracting States:
**AT BE CH DE DK ES FR GB GR IE IT LI LU MC NL PT SE**

(30) Priority: **28.12.1992 US 997689**

(43) Date of publication of application:
**06.07.1994 Bulletin 1994/27**

(60) Divisional application:
**98110268.4 / 0 876 764**

(73) Proprietor:
**UNIGATE NETHERLANDS B.V.
1071 GK Amsterdam (NL)**

(72) Inventors:
• **Buliga, Gregory Samuel
Mount Prospect, Illinois 60056 (US)**
• **Powell, William Francis
Liverpool L13 6QU (GB)**

• **Miller, Mark Stuart
Arlington Heights, Illinois 60004 (US)**
• **Daniel, Gerard Lis
Wheeling, Illinois 60090 (US)**

(74) Representative:
**Eyles, Christopher Thomas et al
W.P. THOMPSON & CO.
Celcon House
289-293 High Holborn
London WC1V 7HU (GB)**

(56) References cited:
| | |
|---|---|
| EP-A- 0 237 120 | EP-A- 0 298 561 |
| EP-A- 0 509 707 | EP-A- 0 529 892 |
| EP-A- 0 596 546 | WO-A-91/07106 |
| WO-A-94/12043 | GB-A- 2 229 077 |
| US-A- 5 219 602 | |

• FOOD TECHNOLOGY, vol. 45, no.8, August 1991
pages 262-263 ,276,

## Description

### Field of the Invention

The present invention relates generally to a non-fat or low fat product that has the appearance of margarine. In particular, the invention relates to a non-fat or low fat product that has the appearance and taste of margarine, but has substantially fewer calories and has no fat.

### Background of the Invention

In recent years, there has been a substantial research effort directed to reducing or eliminating the fat in various water continuous food products, such as ice cream, pourable dressings, salad dressing, mayonnaise and cheese. To produce these fat reduced products, many fat mimetic materials have been developed.

U.S. Patent No. 4,734,287 to Singer, et al. describes a proteinaceous, water-dispersible macrocolloid comprising substantially non-aggregated particles of dairy whey protein. U.S. Patent No. 4,911,946 to Singer, et al. discloses a fat substitute which comprises water-dispersable macrocolloid particles having a substantially spheroidal shape and a particle size distribution effective to impart the substantially smooth organoleptic character of an oil-and-water emulsion. The particles are produced by subjecting carbohydrate materials such as quinoa starch, calcium alginate, cross-linked dextran, gellan gum, konjac, mannan, chitin, schizophyllan and chitosan to high shear forces by introducing a carbohydrate solution into a highly turbulent reaction zone. This treatment produces gelled microparticles having the spheroidal shape and size described in this patent. U.S. Patent No. 5,104,674 to Chen, et al. describes fat mimetic materials which are produced by subjecting fibers of a polysaccharide gum and various protein sources to high shear forces to microfragment the particles.

While numerous fat mimetic materials have been produced, such fat mimetic materials are almost universally used in a water continuous product, such as a pourable dressing, mayonnaise or salad dressing. Only recently have attempts been made to produce a non-fat substitute for fat continuous systems, such as butter and margarine. U.S. Patent No. 4,956,193 to Cain, et al. and European Published Patent Specification No. 0298561 A2 describe a non-fat edible plastic dispersion which is a substitute for butter or margarine. The edible plastic dispersion of the Cain, et al. patent includes at least two condensed phases, at least one of which is continuous. The dispersion includes two gel forming compositions (A) and (B). Gel forming composition A contains 1-8 times the critical concentration of a gelling agent (a) selected from the group consisting of gelatin, kappa carrageenan, iota carrageenan, alginate, agar, gellan, pectin and mixtures thereof. Gel forming composition B also contains 1-8 times the critical concentration of a gelling agent (b) selected from the group consisting of gelling starch, denatured whey protein, denatured bovine serum protein, denatured soy protein, microcrystalline cellulose and mixtures thereof. The dispersion can contain a thickening agent, such as xanthan gum, as well as NaCl and water.

European Published Patent Specification No. 0509707 A1 proposes an edible spread which, when pasteurized, cooled and set, forms a spread of desired consistency and which comprises water, from 2 to 20% by weight of water soluble starch, which may include a hydrolysed soluble starch, such as Paselli MD10, from 0.05 to 1.5% by weight of alginate as part of a water binding system, and an amount of a food compatible divalent metal ion source material, such as calcium citrate, sufficient to stabilize the water binding system. The water binding system may include from 1 to 15% of a soluble vegetable fibre, such as inulin.

European Published Patent Specification No. 0237120 A1 discloses an aqueous phase composition comprising 3 to 20% of a gelling maltodextrin, such as Paselli maltodextrin SA2$^®$, 0.5 to 5 % of another gelling agent, such as gelatin, and water. Optional ingredients include salt.

A margarine with a fat content of 5 to 30% is disclosed in United Kingdom Published Specification No. 2229077 A. This may contain 80-55% aqueous medium, 5-30% fat mixture containing hardened fat, 8-15% maltodextrin, optionally 0.5-3% modified starch (e.g. modified wax maize starch), 1-2% whey protein concentrate, 0.4-0.6% carrageenin and 0.4-0.6% gelatin, as well as, optionally, aroma and coloring materials.

In European Published Patent Specification No. 0596546 A1, which forms part of the state of the art pursuant to Article 54(3) EPC, a low fat spread is disclosed which comprises 10 to 50 wt% of an oligofructose, such as inulin, 0.05 to 30 wt% of a biopolymer other than oligofructose (such as a starch or gum) and less than 20 wt% of an oil phase.

In Example 7 of European Published Patent Specification No. 0529892 A1, which also forms part of the state of the art pursuant to Article 54(3) EPC, a table spread is described which contains, amongst other ingredients, 0.10% by weight of xanthan gum, 7.00% by weight of a maltodextrin (which is believed to be non-gelling), 12.90% by weight of a fragmented amylose starch produced by enzymic hydrolysis, and 19.83% by weight of partially hydrogenated corn oil.

In Examples 1 and 2 of International Patent Publication No. 94/12043, which is yet another document which forms part of the state of the art pursuant to Article 54(3) EPC, there are disclosed spreads which have fat contents of 25% and 20% respectively and which contain microcrystalline cellulose or a mixture of microcrystalline cellulose and galactomannan as a fat substitute.

International Patent Publication No. 91/07106 teaches a food grade, insoluble bulking agent comprising retrograded starch having a crystalline structure which is substantially free of amorphous starch.

The fat replacer Stellar™ is described in Food Technology, Vol. 45, No. 8, page 262 (August 1991).

The present invention is directed to providing non-fat or low-fat substitutes for fat-containing spreads, such as margarine. Such products are available in the marketplace today containing high levels of fat of about 64%.

According to the present invention there is provided a non-fat or low fat spreadable margarine which contains no more than 15% by weight of fat and which comprises:

(a) a fat mimetic selected from gelling type maltodextrins and starch modified by acid hydrolysis to remove amorphous regions therefrom,
(b) 0 to 5% by weight of a bulking agent selected from non-gelling maltodextrins, polydextrose and corn syrup solids,
(c) a texturizing agent selected from (i) a mixture of inulin in an amount of from 10% to 23% by weight and calcium citrate in an amount of from 0.75% to 3.0% by weight, and (ii) mixtures thereof with from 0.1% to 2.0% by weight of xanthan gum, and
(d) water.

Summary of the Invention

The non-fat or low fat edible plastic dispersion of the invention which has rheological properties similar to solid margarine includes a fat mimetic selected from the group consisting of gelling type maltodextrins and modified starch, 0 to 5% by weight of a bulking agent selected from the group consisting of non-gelling maltodextrins, polydextrose and corn syrup solids, preferably low DE corn syrup solids, and a texturizing agent which is selected from (i) a mixture of inulin in an amount of from 10% to 23% by weight and calcium citrate in an amount of from 0.75% to 3.0% by weight, and (ii) mixtures thereof with from 0.1% to 2.0% by weight of xanthan gum.

Detailed Description of the Invention

The fat mimetics useful in the non-fat or low fat spreadable margarine type formulation are selected from the group consisting of gelling type maltodextrins and starch modified by acid hydrolysis. An example of a gelling type maltodextrin is marketed under the tradename Paselli™ by the Avebe Company of the Netherlands. Paselli™ is a potato starch enzymatically modified to produce a maltodextrin having a very low DE, below 5. An example of a starch modified by acid hydrolysis is Stellar™, manufactured by A.E. Staley Company. Stellar™ is made by sequential acid hydrolysis and fractionation of granular amylose-amylopectin starch materials. The DE of Stellar™ is between about 6 to 10. The fat mimetic is preferably used in the spreadable margarine type formulation of the present invention at a level of from 3.5% to 8%. All percentages used herein are by weight based on the non-fat or low fat margarine product unless otherwise indicated.

The bulking agents useful for the non-fat or low fat spreadable margarine type product are selected from the group consisting of non-gelling maltodextrins, polydextrose and corn syrup solids preferably having a DE of from 24 to 42. The bulking agent is present in the non-fat or low fat spreadable margarine product at a level of from 0 to 5%. That is, the bulking agent is optional in the non-fat spreadable margarine product. If used in the non-fat or low fat spreadable margarine, the bulking agent is present at a level of from 1% to 5%.

Inulin is present in the non-fat or low fat spreadable margarine product at a level of from 10-23%. At levels above about 23%, however, the inulin imparts a sweet taste which may be undesirable in some products. The inulin is functional to impart the desired properties to the non-fat or low fat margarine substitute of the present invention without any modifying components. It has been determined that the level of inulin can be lowered to within the range of between 10% to 23% if calcium citrate is added to the formulation. The calcium citrate utilized is preferably of the type described in U.S. Patent No. 5,149,552, which issued on September 22, 1992. The calcium citrate of this patent has the formula: $Ca_n(C_6H_5O_7)_2$; wherein n is a value from 2.5 to 2.95. The calcium citrate is present at a level of from 0.75% to 3%.

Inulin is a polysaccharide derived from various plant tubers, such as dahlia, jerusalem artichokes and chicory. Inulin is a polysaccharide of fructose units with a molecular weight of about 5,000. The molecular weight of inulin is dependent upon its source.

Xanthan gum is optional in the non-fat or low fat spreadable margarine. When present, xanthan gum is used at a level of from 0.1% to 2.0%, preferably from 0.4% to 1.75%.

The non-fat or low fat margarine of the present invention preferably also contains salt at a level of from 1.0% to 2.5%. The formulations may also contain vitamins, preservatives, flavoring components and coloring components.

While a typical spreadable margarine type texture and flavor can be attained without the presence of any fat, fats and oils can be included in the formulations at levels up to about 15%, if desired. Suitable fats include butterfat, vegetable oils and flavored oils known as butter oils. If used, the fat and oil is present at a level of from 0.5% to 15%.

In the manufacture of the non-fat or low fat spreadable margarine product, a salt solution is first prepared in a holding tank. The preservatives used are also combined with the salt in the salt solution. In general, the salt solution will contain from 1% to 5% salt.

The salt solution is pumped to a second tank where it is mixed with the fat mimetic, the bulking agent, if used, the inulin and any flavors and colorants. The salt solution and other components are metered into the batch mix tank at levels sufficient to provide the desired levels in the finished product.

After being combined in the batch mix tank, the non-fat or low fat spreadable formulation is pumped to a high pressure homogenizer, such as a Rannie™ homogenizer. It has been determined that the non-fat or low fat margarine product must be processed at a pressure above 6,000 psi (413.69 bar) to obtain the rheological properties desired in the finished product. Homogenization pressures of from 8,000 psi to 11,000 psi 551.58 bar to 758.42 bar) are desirable. The non-fat or low fat margarine product after being homogenized is transferred to the holding tank. Since substantial heat is developed during processing through the high pressure homogenization apparatus, the formulation is then pumped through cooling heat exchangers prior to being packaged at a temperature of 60°F (15.6°C) to provide a non-fat or low fat spreadable margarine after a period of refrigerated storage of about 24 hours.

The following example further illustrates various features of the invention, but is intended to in no way limit the scope of the invention, which is set forth in the appended claims.

Example

A non-fat spreadable margarine type product was prepared from the components set forth in Table 1.

Table 1

| Ingredients | Percentages |
|---|---|
| Water | 70.1755% |
| Inulin | 20.0000% |
| Stellar™ modified starch | 5.0000% |
| Calcium Citrate | 1.5000% |
| Vitamin A (Type 250-S) | 0.0148% |
| Salt (Sodium Chloride) | 2.0000% |
| Sodium Benzoate | 0.0500% |
| Potassium Sorbate | 0.0500% |
| Calcium Disodium EDTA | 0.0075% |
| Lactic Acid (50%) | 0.2500% |
| Titanium Dioxide (TiO$_2$) | 0.1000% |
| Yellow #5 | 0.0016% |
| Yellow #6 | 0.0006% |
| Mouthfeel (MV04) | 0.1500% |
| Butter Flavor | 0.7000% |

Table 1 (continued)

| Ingredients | Percentages |
|---|---|
| TOTAL | 100.0000% |

The non-fat spreadable margarine was prepared by combining 15% of the water with the salt, the potassium sorbate, the sodium benzoate and the calcium disodium EDTA in a holding tank to provide a salt solution. The salt solution was maintained at a temperature of 120°F (48.9°C). The salt solution was metered into a second tank along with the inulin, the Stellar™, the flavor and color components and the remaining water in a batch mix tank. The mixture was pumped through a Rannie™ homogenizer and was homogenized at a pressure of 11,000 psi (758.42 bar). The formulation emerged from the Rannie™ homogenizer at a temperature of 150°F (65.6°C). The formulation was transferred to a holding tank and was pumped through cooling heat exchangers to reduce the temperature to 60°F (15.6°C) for packaging. The spreadable margarine formulation was held at a refrigeration temperature of 40°F (4.4°C) for 1 day to attain the desired rheological properties.

Claims

1. A non-fat or low fat spreadable margarine which contains no more than 15% by weight of fat and which comprises:

   (a) a fat mimetic selected from gelling type maltodextrins and starch modified by acid hydrolysis to remove amorphous regions therefrom,
   (b) 0 to 5% by weight of a bulking agent selected from non-gelling maltodextrins, polydextrose and corn syrup solids,
   (c) a texturizing agent selected from (i) a mixture of inulin in an amount of from 10% to 23% by weight and calcium citrate in an amount of from 0.75% to 3.0% by weight, and (ii) mixtures thereof with from 0.1% to 2.0% by weight of xanthan gum, and
   (d) water.

2. A margarine according to claim 1, wherein said fat mimetic is present at a level of from 3.5% to 8% by weight.

3. A margarine according to claim 1 or claim 2, wherein said bulking agent is present at a level of from 1.0% to 5% by weight.

4. A margarine according to any one of claims 1 to 3, wherein said margarine also comprises salt at a level of from 1.0% to 2.5% by weight.

5. A margarine according to any one of claims 1 to 4, which also comprises from 0.5% to 15% by weight of a fat or oil.

**Patentansprüche**

1. Fettlose oder fettarme, streichfähige Margarine, die nicht mehr als 15 Gew.-% Fett enthält und

   (a) eine Fettnachahmung, die ausgewählt ist unter gelierenden Maltodextrinen und Stärke, die zur Entfernung ihrer amorphen Bereiche durch Säurehydrolyse modifiziert ist,
   (b) 0 bis 5 Gew.-% eines Füllmittels, das unter nicht-gelierenden Maltodextrinen, Polydextrose und Maissirup-Feststoffen ausgewählt ist,
   (c) ein Texturierungsmittel, das unter (i) einem Gemisch aus Inulin in einer Menge von 10 bis 23 Gew.-% und Calciumcitrat in einer Menge von 0,75 bis 3,0 Gew.-% und (ii) dessen Gemischen mit 0,1 bis 2,0 Gew.-% Xanthangummi ausgewählt ist, und
   (d) Wasser enthält.

2. Margarine nach Anspruch 1, bei der die genannte Fettnachahmung in einem Gehalt von 3,5 bis 8 Gew.-% vorliegt.

3. Margarine nach Anspruch 1 oder Anspruch 2, bei der das Füllmittel in einem Gehalt von 1,0 bis 5 Gew.-% vorliegt.

4. Margarine nach einem der Ansprüche 1 bis 3, bei der die genannte Margarine auch Salz in einem Gehalt von 1,0 bis 2,5 Gew.-% enthält.

5. Margarine nach einem der Ansprüche 1 bis 4, die auch 0,5 bis 15 Gew.-% eines Fettes oder Öles enthält.

**Revendications**

1. Margarine facile à tartiner sans matière grasse, ou à faible teneur en matière grasse, qui ne contient pas plus de 15 % en poids de matière grasse et qui comprend :

   (a) un succédané de graisse choisi parmi des maltodextrines de type gélifiant et de l'amidon modifié par hydrolyse acide pour en éliminer les régions amorphes,
   (b) de 0 à 5 % en poids d'un épaississant choisi parmi les maltodextrines non gélifiantes, le polydextrose et le sirop de glucose déshydraté,
   (c) un texturant choisi parmi (i) un mélange de 10 à 23 % en poids d'inuline avec de 0,75 % à 3,0 % en poids de citrate de calcium, et (ii) des mélanges de ceux-ci avec de 0,1 à 2,0 % en poids de gomme de xanthane, et
   (d) de l'eau.

2. Margarine selon la revendication 1, dans laquelle ledit succédané de graisse est présent à raison de 3,5 à 8 % en poids.

3. Margarine selon l'une des revendications 1 ou 2, dans laquelle ledit épaississant est présent à raison de 1,0 à 5 % en poids.

4. Margarine selon l'une quelconque des revendications 1 à 3, dans laquelle ladite margarine comprend également du sel à raison de 1,0 à 2,5 % en poids.

5. Margarine selon l'une quelconque des revendications 1 à 4, qui comprend également de 0,5 à 15 % en poids d'une graisse ou d'une huile.